# EUROPÄISCHE PATENTSCHRIFT

(11) **EP 2 462 344 B1**
(45) Veröffentlichungstag und Bekanntmachung des Hinweises auf die Patenterteilung: **08.04.2015**
(21) Anmeldenummer: 10754671.5
(22) Anmeldetag: 29.07.2010
(51) Int. Cl.: F03D 7/02, F03D 11/00

(54) **WINDENERGIEANLAGE MIT EINRICHTUNG ZUR LASTMINIMIERUNG**
WIND TURBINE HAVING A DEVICE FOR MINIMIZING LOADS
ÉOLIENNE PRÉSENTANT UN DISPOSITIF DE MINIMISATION DE CHARGES

(30) Priorität: 07.08.2009 DE 102009036517
(43) Veröffentlichungstag der Anmeldung: 13.06.2012
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2010/000887
(87) Internationale Veröffentlichungsnummer: WO 2011/015180

(56) Entgegenhaltungen:
- EP-A1- 1 243 790
- WO-A1-2006/024146
- DE-A1-102006 002 708
- DE-A1-102007 059 165
- US-A1- 2009 129 924
- BOSSANYI E A: "INDIVIDUAL BLADE PITCH CONTROL FOR LOAD REDUCTION", WIND ENERGY, WILEY, CHICHESTER, GB, Bd. 6, 8. Oktober 2002 (2002-10-08), Seiten 119-128, XP008031928, ISSN: 1099-1824, DOI: DOI:10.1002/WE.76

## Beschreibung

Die Erfindung betrifft eine Windenergieanlage mit einem Turm, einer auf dem Turm angeordneten Energiewandlungseinheit, einem mit der Energiewandlungseinheit verbundenen Rotor, der zwei an einer Nabe befestigte Rotorblätter aufweist, einem in der Nabe angeordneten Messmittel zur Messung der mechanischen Verformung der Nabe und einer Einzelblattsteuerung zur Einstellung der Blatteinstellwinkel der Rotorblätter zur Verminderung der mechanischen Belastung der Komponenten der Windenergieanlage.

Eine derartige Windenergieanlage, die den Oberbegriff von Anspruch 1 der vorliegenden Anmeldung bildet, ist bereits aus der EP 1 243 790 B1 bekannt. Diese sieht Messmittel zum Erfassen von momentanen, nur an einem Teil der Windenergieanlage lokal anliegenden Beanspruchungen vor, wobei mittels einer auf eine Vorrichtung zur Einzelblattverstellung der Rotorblätter eines wenigstens ein Rotorblatt tragenden Rotors wirkende Steuerung derart eingerichtet ist, dass lokale Spitzen in der Belastung der Rotorblätter, der Nabe, des Achsantriebs und der verwendeten Lager vermieden werden.

Bei den von der vorbekannten Windenergieanlage verwendeten Messmitteln handelt es sich um Dehnungsstreifen, die auf dem Rotorblatt, im Inneren des Rotorblatts, auf der Rotornabe oder im Innern der Rotornabe, auf dem Achszapfen oder im Inneren des Achszapfens, auf der Antriebswelle oder im Innern der Antriebswelle oder an den Lagern angebracht sind.

Insbesondere sind die an der Rotornabe angebrachten Dehnungsstreifen in der Rotorblattebene, mit dieser fluchtend angeordnet.

Nachteil der Verwendung von Dehnungsstreifen sind der hohe Montage- und Wartungsaufwand, die Messungenauigkeit aufgrund recht langsamer Messung und hoher Lastzyklen und der relativ schnelle Verschleiß dieser Art Messmittel. Dehnungsmessstreifen sind gegenüber mechanischer Belastung, insbesondere einem Überdehnen empfindlich und können sich bei hoher Wechselbeanspruchung vom Träger lösen.

Alternativ ist es daher aus der DE 101 60 360 B4 bekannt, einen Lichtwellenleiter im Rotorblatt zu verlegen und die auf ein Rotorblatt wirkende mechanische Belastung durch Vergleich der Menge des eintretenden und des austretenden Lichts zu ermitteln, wobei eine Anlagensteuerungen vorgesehen ist, die eine automatische Einstellung zur Entlastung der Rotorblätter vornimmt.

Nachteil dieser Ausgestaltung ist jedoch der mit der Verlegung des Lichtwellenleiters einhergehende Arbeitsaufwand bei der Produktion der Rotorblätter. Darüberhinaus sind Lichtwellenleiter - wie Dehnungsmessstreifen auch - gegenüber mechanischer Belastung empfindlich und grundsätzlich aufgrund der Gefahr von Beschädigung durch mechanische Belastung wenig zuverlässige Messmittel im Bereich der Lastermittlung von Komponenten von Windenergieanlagen.

Daher sind in jüngster Zeit andere Vorrichtungen zum Ermitteln von auf Rotorblätter wirkenden Lasten bekannt geworden, z.B. DE 20 2007 008 066 U1 und DE 10 2006 002 708 B4. Diese sehen eine in der Nabe der Windenergieanlage angeordnete, in die Rotorblätter Licht einstrahlende Lasermessvorrichtung vor, wobei Auslenkungen der Rotorblätter mittels Abweichungen des Laserstrahls von in den Blättern angeordneten Referenzpunkten bzw. mittels Abweichungen des reflektierten Lichts erfasst werden und an den Blättern auftretende Überlasten durch geeignete Steuerungsmechanismen vermieden werden können.

Nachteil dieser Ausgestaltungen ist wiederum der hohe Arbeitsaufwand beim Einrichten des Messsystems, insbesondere der erhöhte Arbeitsaufwand beim Herstellen der Rotorblätter.

Die herkömmlichen, auf Betriebsfestigkeitslasten ausgelegten Windenergieanlagen weisen meistens aufgrund des hohen Materialverbrauchs auch ein hohes Gewicht auf, wobei der hohe Materialverbrauch eine entsprechend aufwändige Herstellung der Komponenten der Windenergieanlage, einen aufwändigen Transport und eine aufwändige Errichtung nach sich zieht.

Aufgabe der vorliegenden Erfindung ist es daher, ein einfaches, reaktionsschnelles und einfach zu installierendes Messsystem für Windenergieanlagen zu schaffen, mit dem eine Windenergieanlage derart betrieben werden kann, dass Betriebsfestigkeitslasten minimiert und dadurch eine leichtere und Material sparende Konstruktion ausgelegt werden können.

Die Aufgabe wird gelöst durch die Windenergieanlage mit den Merkmalen von Anspruch 1. Die Unteransprüche geben vorteilhafte Ausgestaltungen der Erfindung wieder.

Grundgedanke der Erfindung ist es, die beispielsweise durch Turbulenzen verursachte ungleichmäßige Lastverteilung, die sich als Biegemoment M_{YR} quer zur Blattachsenausrichtung auswirkt, an den sich gegenüberliegenden Rotorblättern eines Zweiblattrotors durch an der Nabe auftretende Verformung zu erfassen und die Blatteinstellwinkel der Blätter derart zu regulieren, dass sich die Blattanschlussmomente zu einem möglichst geringen Differenzmoment summieren.

Die Erfindung wird anhand eines in den Zeichnungen dargestellten besonders bevorzugt ausgestalteten Ausführungsbeispiels näher erläutert. Es zeigen:
- Fig. 1: eine perspektivische Ansicht einer Windenergieanlage mit einem Zweiblattrotor;
- Fig. 2: eine Frontalansicht auf die Windenergieanlage aus Fig. 1 mit Bezeichnung der Achsen X und Y sowie der Momente M_{YR} und M_{XR} im sich mit dem Rotor drehenden R-Koordinatensystem;
- Fig. 3: eine Frontalansicht auf die Windenergieanlage aus Fig. 1 mit Bezeichnung der Achsen X und Y sowie der Momente M_{YN} und M_{XN} im stehenden N-Koordinatensystem;
- Fig. 4: eine Darstellung der an der Nabe auftretenden Verformungen;
- Fig. 5: (a) eine geschnittene Seitenansicht der Nabe der Windenergieanlage aus Fig. 1 nach einem Ausführungsbeispiel und (b) eine eine geschnittene Seitenansicht der Nabe der Windenergieanlage aus Fig. 1 nach einem alternativen Ausführungsbeispiel;
- Fig. 6: den zeitlichen Verlauf der an der Nabe auftretenden Biegemomente M_{XR} (a) und M_{YR} (b) in einer ungeregelten Windenergieanlage im sich mit dem Rotor drehenden R-Koordinatensystem 3-Blattrotor;
- Fig. 7: den zeitlichen Verlauf der an der Nabe auftretenden Biegemomente M_{XN} (a) und M_{YN} (b) in einer ungeregelten Windenergieanlage im stehenden N-Koordinatensystem 3-Blattrotor;
- Fig. 8: den zeitlichen Verlauf der an der Nabe auftretenden Biegemomente M_{XR} (a) und M_{YR} (b) in einer Windenergieanlage nach der Erfindung im sich mit dem Rotor drehenden R-Koordinatensystem 2-Blattrotor; und
- Fig. 9: den zeitlichen Verlauf der an der Nabe auftretenden Biegemomente M_{XN} (a) und M_{YN} (b) in einer Windenergieanlage nach der Erfindung im stehenden N-Koordinatensystem 2-Blattrotor.

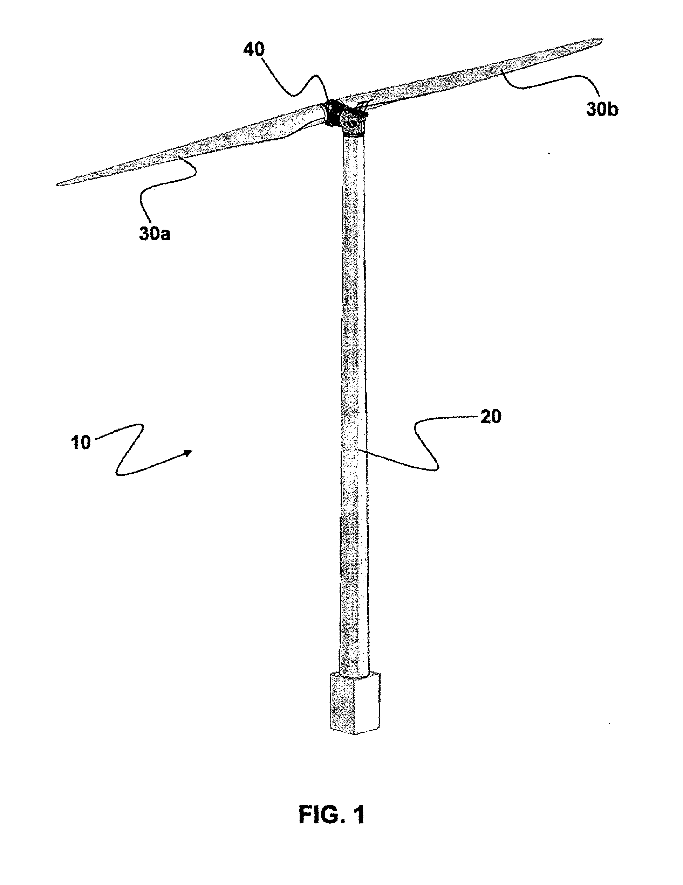

Fig. 1 zeigt eine zur Umsetzung der Erfindung geeignete Windenergieanlage in einer perspektivischen Ansicht. Die Windenergieanlage 10 besteht aus einem Turm 20, ein auf dem Turm angeordneten (nicht bezifferten) Kopfträger oder einer Gondel, in dem bzw. in der die Energiewandlungseinheit angeordnet ist, und einem mit der Energiewandlungseinheit verbundenen Rotor, der zwei an einer Nabe 40 befestigte Rotorblätter 30a, 30b aufweist.

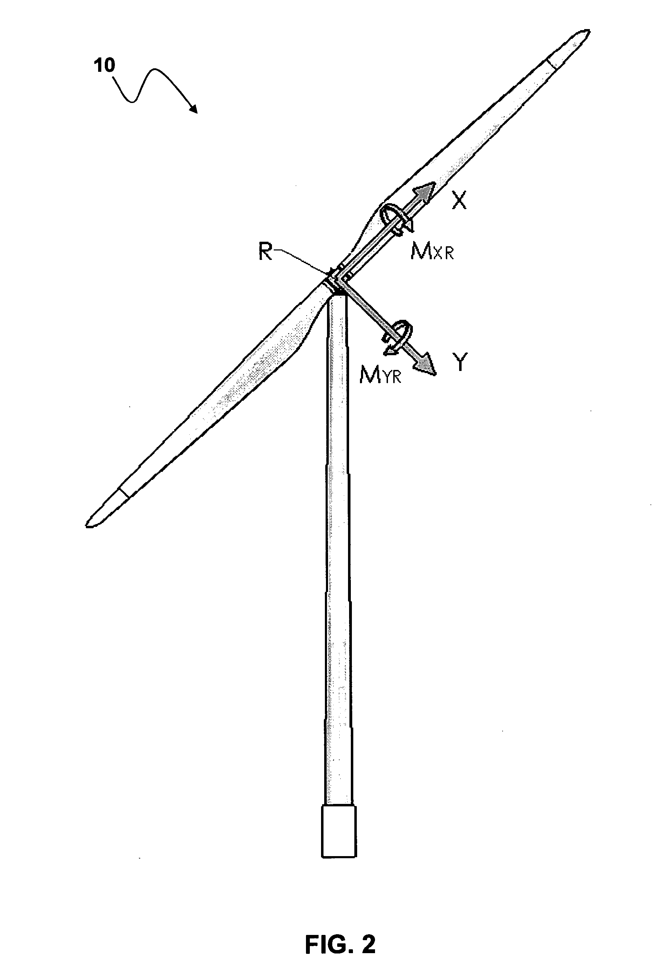

Fig. 2 verdeutlicht die Lage der im sich mit dem Rotor R drehenden R-Koordinatensystem auf die Nabe 40 wirkenden, entlang der Blattachse X und der sich um die Rotorachse mitdrehenden Achse Y auftretenden Biegemomente M_{XR} und M_{YR}.

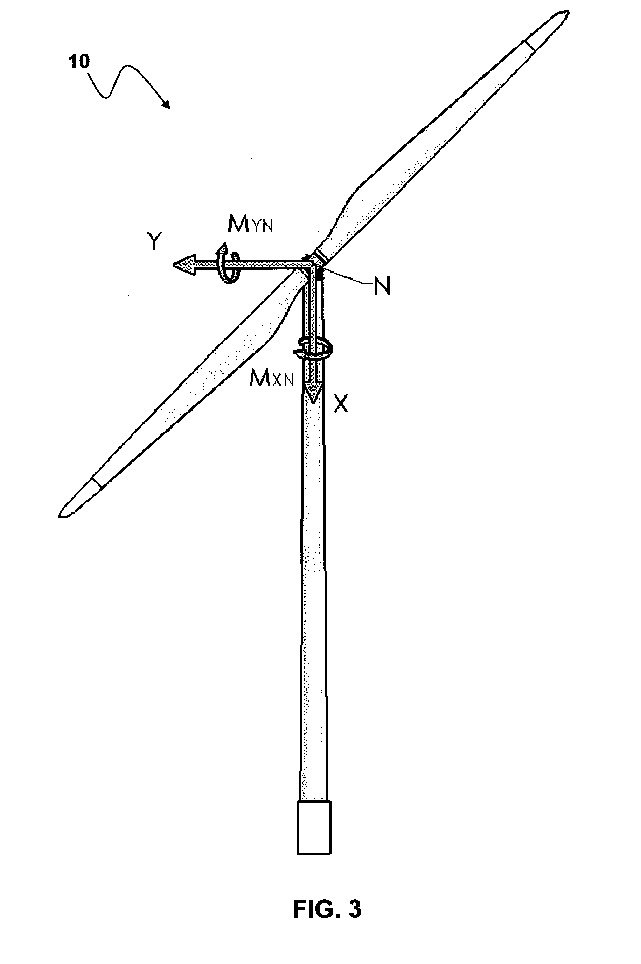

Fig. 3 verdeutlicht die Lage der im fest stehenden N-Koordinatensystem auf die Nabe 40 bzw. N wirkenden, entlang der vertikalen Achse X und der horizontalen Achse Y auftretenden Biegmomente M_{XN} und M_{YN}.

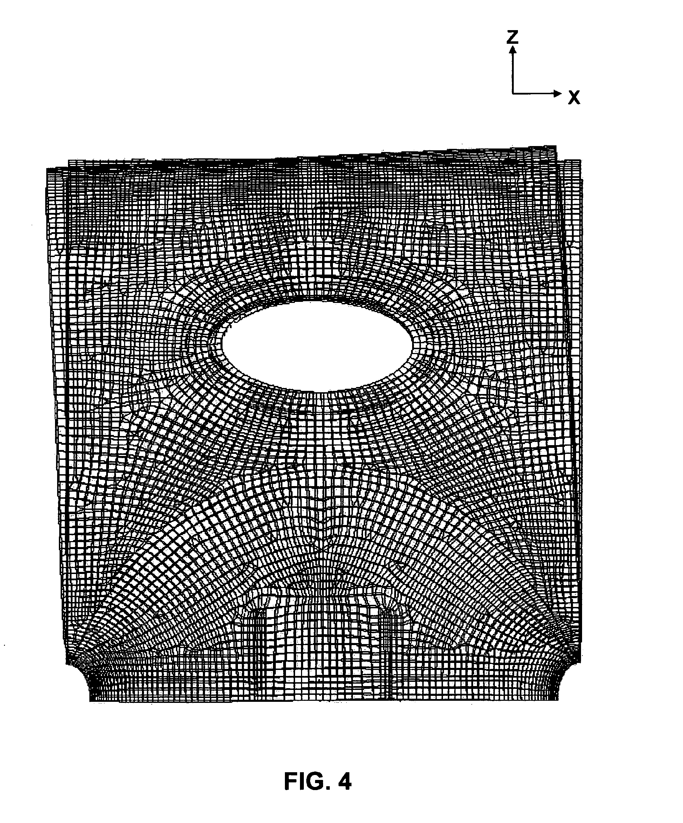

Fig. 4 zeigt den Verformungsplot einer Nabe im Normal- und im unter Last verformten Zustand in einer überlagerten mit einem Überhöhungsfaktor von 300 überzeichneten Darstellung. Dabei ist zu erkennen, dass eine Verformung der Nabe in Richtung der X-Achse aufgrund des y-Biegemomentes auch zu einer messbaren Längenveränderung der Nabe in Richtung der Z-Achse führt.

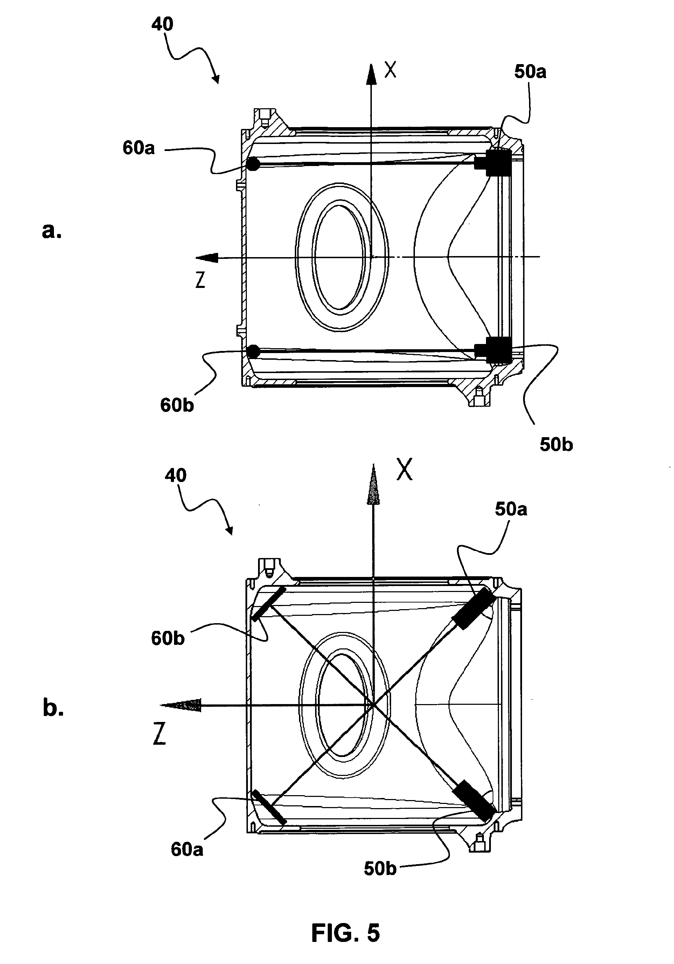

Diese Längenänderung in Richtung der Z-Achse kann als Eingangsgröße zur Regelung der Blatteinstellwinkel genutzt werden, um das Moment MYR zur reduzieren. Hierzu zeigen Fig. 5a, b jeweils einen Schnitt durch die Nabe 40 einer erfindungsgemäß ausgestalteten Windenergieanlage 10 in der X/Z-Ebene (des sich mit dem Rotor drehenden R-Koordinatensystems). In der Nabe 40 sind an definierten, sich im Nabeninnenraum gegenüberliegenden Orten bevorzugt eine Mehrzahl von Messmitteln 50a, 60a, 50b, 60b positioniert, mit denen der Abstand der definierten Orte zueinander gemessen oder eine aufgrund der zu einer Verformung der Nabe 40 führenden Biegemomente führende Abstandsänderung oder Relativverschiebung zwischen den definierten Orten erfasst werden kann.

Beispielsweise kann hierzu eine Lasermesseinrichtung, insbesondere eine Laserentfernungsmesseinrichtung, verwendet werden, wobei z.B. eine Sende-/Empfangseinrichtung 50a, 50b gegenüber einem Reflektor oder Detektor 60a, 60b angeordnet ist. Alternative Lösungen, z.B. mittels Ultraschall oder Induktionsmessung von im Nabeninnenraum verspannter lageveränderlicher Elemente, sind denkbar, solange eine Erfassung der Nabenverformungen gewährleistet ist. Bevorzugt sind Messsysteme mit einer Auflösung im Hundertstel-Millimiter-Bereich, um eine bereits bei geringen Verformungen ansprechende Lastreduzierungsregelung zu ermöglichen.

Bevorzugt sind die Messmittel 50a, 60a, 50b, 60b - wie gezeigt - in der Ebene der (in Fig. 5a, b nicht dargestellten) Rotorblätter 30a, 30b angeordnet, wobei die Messmittel 50a, 60a, 50b, 60b beispielsweise an definierten sich in der Nabe 40 in Längsrichtung gegenüberliegenden Orten angeordnet sind (siehe Fig. 5a). Eine Verformung der Nabe in Richtung der Z-Achse kann so beispielsweise durch die Abstandsänderung der sich gegebüberliegenden Messmittel 50a/60a, 50b/60b - wie in Fig. 5a gezeigt - oder - wie in Fig. 5b gezeigt - durch Detektion der Verschiebung in Richtung der X-Achse der gegenüberliegenden Referenzpunkte an als Detektoren ausgebildeten Messmitteln 60a, 60b ermittelt werden. Beispielsweise kann im zuletzt genannten Fall ein als (CCD-)Kamera ausgebildetes Messmittel 60a, 60b verwendet werden, das ein als Leuchtdiode ausgebildetes Messmittel 50a, 50b erfasst, wobei die Verformung der Nabe 40, also eine lokale Längenänderung der Nabe in Z-Richtung, eine Verschiebung der Kamera in X-Richtung auslöst, sodass das Licht der Leuchtdiode 50a, 50b auf einen im unverfomten Zustand der Nabe unbelichteten Bereich des Kamerasensors fällt und aus der Verschiebung auf die Längenänderung der Nabe in Z-Richtung geschlossen werden kann.

Die Einzelblattsteuerung ist allgemein nun derart eingerichtet, dass aufgrund des mit dem Messmittel erfassten Abstands zwischen den definierten Orten oder der erfassten Abstandsänderung der definierten Orte zueinander der Blatteinstellwinkel eines oder beider Rotorblätter 30a, 30b eingestellt wird, sodass die Differenz der auf die Nabe 40 einwirkenden Blattanschlussmomente einen - bevorzugt im zeitlichen Mittel - möglichst niedrigen Wert einnimmt. So wird beispielsweise eines der Rotorblätter 30a, 30b, das eine hohes Biegemoment aufweist, in eine Stellung gebracht, in der das durch das eine Rotorblatt bewirkte Biegemoment verringert wird und/oder das andere Rotorblatt in Stellung gebracht, in der das durch das andere Rotorblatt bewirkte Biegemoment erhöht wird, mit der Maßgabe, dass die Differenz aus den Biegemomenten der beiden Rotorblätter ein möglichst kleines Rotornickmoment M_{YR} ergibt.

Besonders bevorzugt erfolgt die Einstellung der Blatteinstellwinkel der Rotorblätter 30a, 30b unter Berücksichtigung des von den Rotorblättern eingenommenen Differenzwinkels, wobei z.B. vorbestimmt sein kann, dass ein bestimmter Differenzwinkel nicht überschritten werden darf. Insbesondere ist vorgesehen, dass bei hohen Windgeschwindigkeiten nur ein geringer Differenzwinkel, bei niedrigen Windgeschwindigkeiten jedoch ein hoher Differenzwinkel auftreten darf. Dabei soll speziell immer zunächst das Rotorblatt mit höherer Last derart verstellt werden, dass ein möglichst geringes Rotornickmoment, aber auch eine geringere Last am verstellten Blatt selbst vorliegt.

Die Einstellung des Blatteinstellwinkels erfolgt bevorzugt über eine hydraulische Vorrichtung, die insbesondere in Verbindung mit dem bevorzugt als Lasermesssystem ausgestalteten Messmittel auf kurzfristig auftretende Spitzenlasten sehr schnell reagieren kann. Im Gegensatz zu elektrischen Einstelleinrichtungen, die eine schnelle Regelung aufgrund der Masseträgheit der Anlagenteile nicht erreichen, ermöglicht eine hydraulische Steuerung bei entsprechend ausgelegten Speichern nicht nur eine hohe Geschwindigkeit, sondern auch eine hohe Beschleunigung der Ansteuerung des Blatteinstellwinkels.

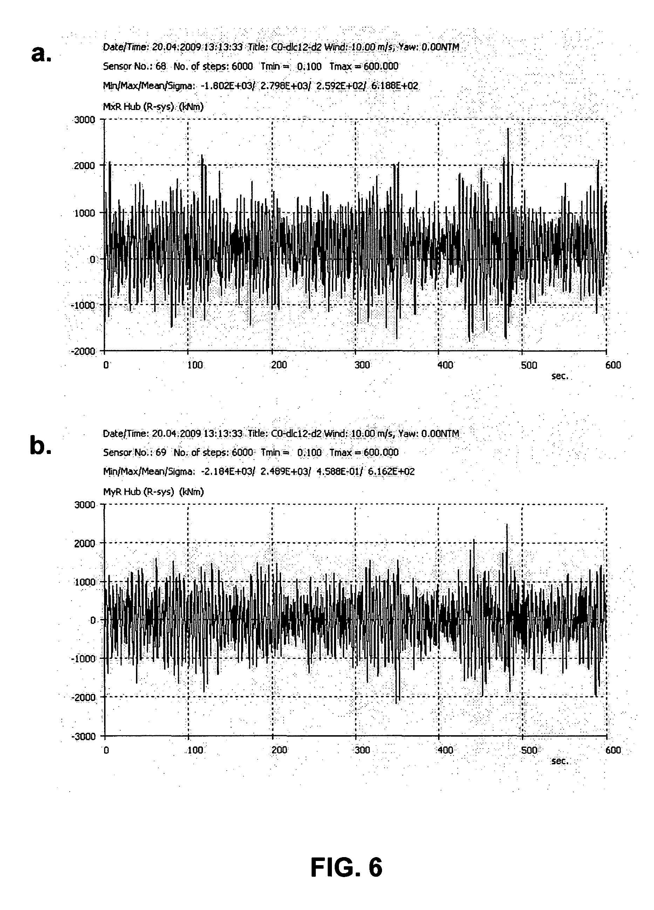

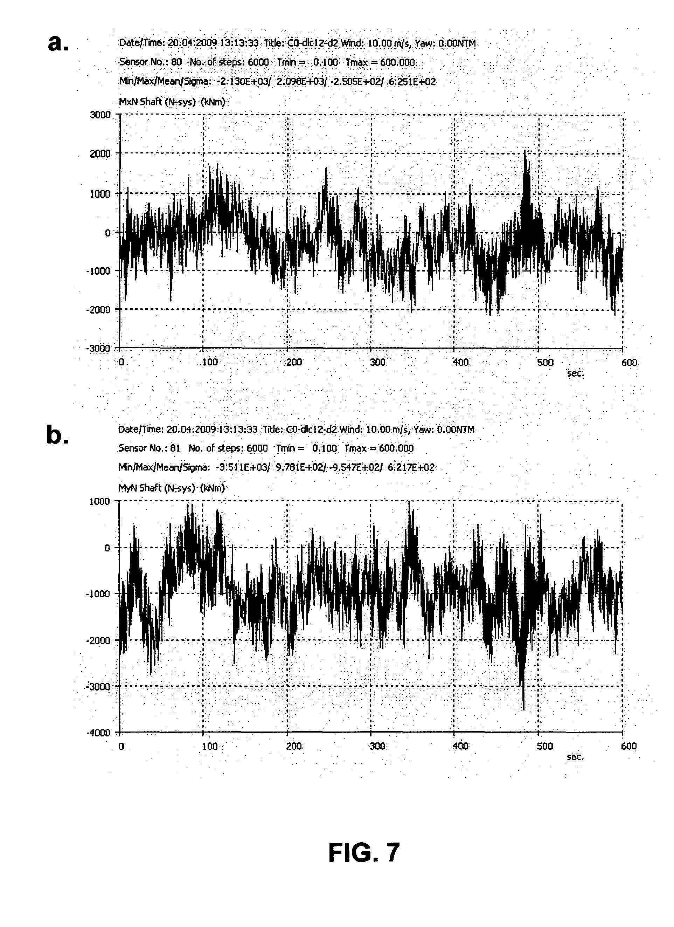

Zur Veranschaulichung der die Basis der Erfindung darstellenden Vorüberlegungen zeigen Fig. 6 und Fig. 7 den zeitlichen Verlauf der an der Nabe eines 3-Blattrotors einer herkömmlichen ungeregelten Windenergieanlage nach dem Stand der Technik auftretenden Biegemomente M_{XR} (Fig. 6a) und M_{YR} (Fig. 6b) im sich mit dem Rotor drehenden R-Koordinatensystem und der Biegemomente M_{XN} (Fig. 7a) und M_{YN} (Fig. 7b) im stehenden N-Koordinatensystem.

Insbesondere Fig. 6 zeigt, dass sowohl beim Biegemoment M_{XR} als auch beim Biegemoment M_{YR} kurzzeitig hohe Lastspitzen von >2.000 kNm auftreten können, die gemäß dem Stand der Technik eine Auslegung der Windenergieanlagenteile für derartig hohe Betriebsfestigkeitslasten erforderlich machen. Fig. 7 zeigt dabei aufgrund der in mehrere Richtungen auftretenden Belastungen einen unsteten zeitlichen Belastungsverlauf der auf die Nabe wirkenden Biegemomente M_{XN} (Fig. 7a) und M_{YN} (Fig. 7b), wobei die in Fig. 6 gezeigten ungefähr gleich großen Biegemomente M_{XR} (Fig. 6a) und M_{YR} (Fig. 6b) des rotierenden R-Koordinatensystems sich unmittelbar auf die starken Schwankungen der Biegemomente M_{XN} (Fig. 7a) und M_{YN} (Fig. 7b) auswirken.

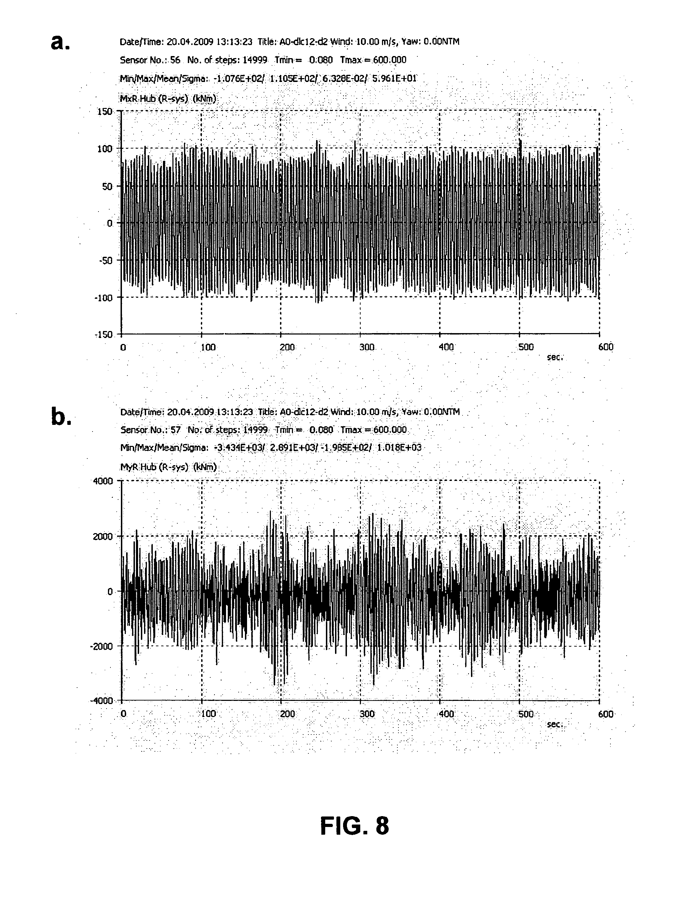

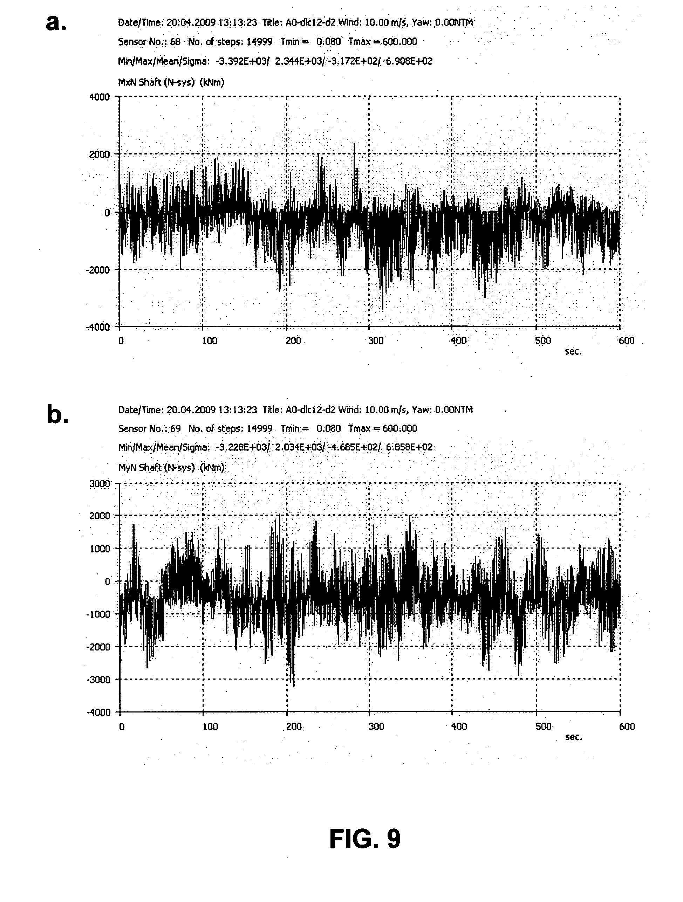

Im Gegensatz dazu sind die Lastverhältnisse bei einem herkömmlichen aus dem Stand der Technik bekannten 2-Blattrotor überschaubarer, einfacher und effektiver zu regulieren, da im Wesentlichen nur Momente quer zur Blattachse auftreten, wobei die Momente um die Blattachse (M_{XR}) ungefähr um den Faktor 10-20 kleiner als bei 3-Blattanlagen sind. Die Regelung einer 2-Blattanlage stellt also im Wesentlichen nur ein eindimensionales Problem, die Regelung einer 3-Blattanlage hingegen stellt ein (kaum bzw. schlecht regelbares) zweidimensionales Problem dar. Insbesondere resultiert aus einer auf die Nabe wirkenden, gegenüber einem 3-Blattrotor um den Faktor 10 bis 20 verringerten Moments M_{XR} im rotierenden R-Koordinatensystem (siehe Fig. 8a) ein in Fig. 9a gezeigtes im zeitlichen Mittel stark verringertes auf die Nabe wirkendes Moment M_{YN} im stehenden N-Koordinatensystem.

Mit der erfindungsgemäß vorgeschlagenen Lastreduzierungsregelung für einen 2-Blattrotor ergibt sich also als Vorteil der vorliegenden Erfindung speziell, dass Bauteildimensionierende Biegelasten permanent reduziert werden können, woraus eine erhebliche Material- und damit Kosteneinsparung bei der Fertigung von stark beanspruchten Windenergieanlagenkomponenten, z.B. Rotornabe, Rotorwelle, Lager, Lagergehäuse und Maschinenträger, resultiert.

Um die Betriebssicherheit zu gewährleisten ist schließlich vorgesehen, dass die Lastkollektive gemessen werden, wobei auch die Spitzenwerte erfasst werden können. Um die Wirkung der erfindungsgemäßen Lastreduzierungsregelung und damit die Funktion der Lastreduzierungsregelung selbst zu überwachen, ist darüber hinaus vorgesehen, dass die Steuerung für einen vorbestimmten Zeitraum, in vorbestimmten Zeitintervallen und/oder bei vorbestimmten Umweltbedingungen, z.B. bestimmte Windgeschwindigkeiten, ausgeschaltet wird, wobei allerdings weiterhin die an der Nabe auftretenden Verformungen gemessen werden. Ein Vergleich eines vorbestimmten Zeitraums mit ausgeschalteter Steuerung mit einem gleichlangen Zeitraum mit eingeschalteter Steuerung gibt Aufschluss über die Effektivität der Steuerung und der Betriebssicherheit der Anlage (sollte die Steuerung beispielsweise aufgrund eines Defekts ausgefallen sein).

Diese in zeitlichen Abständen sich wiederholende Überprüfung ist als Nachweis der Funktionstauglichkeit der erfindungsgemäßen Lastreduzierungsregelung geeignet - sollten sich keine Unterschied zwischen den in den unterschiedlichen Zeiträumen an der Nabe auftretenden Lasten ergeben, ist die Windenergieanlage abzuschalten oder in der Leistung zu begrenzen, da zwingend vermieden werden muss, dass die Anlage tatsächlich höheren Lasten ausgesetzt wird als denjenigen Maximallasten, für die die Windenergieanlage nicht dimensioniert ist. In jedem Fall ist eine Warnmeldung and die die Anlage überwachende Einrichtung zu übermitteln.

Schließlich ist es durch Aufzeichnung der Lastkollektive und Vergleich mit der Auslegung der Windenergieanlage auch möglich, die durch die Betriebssicherheit vorgegebene maximale Laufzeit der Anlage zu bestimmen, wobei sich die tatsächliche Laufzeit der Anlage je nach tatsächlich auftretenden Lasten verkürzen oder auch verlängern kann. In jedem Fall ist durch eine derartige Überwachung eine bessere Materialausnutzung ermöglicht.

## Patentansprüche

1. Windenergieanlage (10) mit
- einem Turm (20),
- einer auf dem Turm (20) angeordneten Energiewandlungseinheit,
- einem mit der Energiewandlungseinheit verbundenen Rotor, der zwei an einer Nabe (40) befestigte Rotorblätter (30a, 30b) aufweist,
- einem in der Nabe (40) angeordneten Messmittel zur Messung der mechanischen Verformung der Nabe (40) und
- einer Einzelblattsteuerung zur Einstellung der Blatteinstellwinkel der Rotorblätter (30a, 30b),
**dadurch gekennzeichnet, dass**
das Messmittel (50a, 60a, 50b, 60b) zum Erfassen des Abstands zwischen zwei definierten, sich in der Nabe (40) gegenüberliegenden Orten eingerichtet ist, und
die Einzelblattsteuerung aufgrund des zwischen den definierten Orten gemessenen Abstands oder der zwischen den definierten Orten gemessenen Abstandsänderung zu derjenigen Einstellung der Blatteinstellwinkel beider Rotorblätter eingerichtet ist, die ein minimales Rotornickmoment M_{YR} bewirkt.

2. Windenergieanlage (10) nach Anspruch 1, **dadurch gekennzeichnet, dass** die definierten, sich gegenüberliegenden Orte in einer von Rotorblättern (30a, 30b) und Rotorachse gebildeten Ebene angeordnet sind.

3. Windenergieanlage (10) nach einem der vorhergehenden Ansprüche, **dadurch gekennzeichnet, dass** die definierten Orte in der Nabe (40) parallel zur Rotorachse angeordnet sind.

4. Windenergieanlage (10) nach einem der vorhergehenden Ansprüche, **dadurch gekennzeichnet, dass** die definierten Orte sich an in der Nabe (40) diagonal gegenüberliegenden Positionen befinden.

5. Windenergieanlage (10) nach einem der vorhergehenden Ansprüche, **dadurch gekennzeichnet, dass** das Messmittel (50a, 60a, 50b, 60b) eine Lasermesseinrichtung ist.

6. Windenergieanlage (10) nach einem der Ansprüche 1 bis 5, **dadurch gekennzeichnet, dass** die Messmittel (50a, 60a, 50b, 60b) ein Leuchtmittel und eine die Position des Leuchtmittels erfassende Kamera aufweisen.

7. Windenergieanlage (10) nach einem der vorhergehenden Ansprüche, **dadurch gekennzeichnet, dass** die Einzelblattsteuerung zum Bewirken eines minimalen Rotornickmoments M_{YR} unter Berücksichtigung des Differenzwinkels der Rotorblätter (30a, 30b) eingerichtet ist.

8. Windenergieanlage (10) nach Anspruch 7, **dadurch gekennzeichnet, dass** der Differenzwinkel der Rotorblätter (30a, 30b) in Abhängigkeit von der Windgeschwindigkeit gesteuert ist.

## Claims

1. A wind turbine (10), comprising
- a tower (20),
- an energy conversion unit arranged on the tower (20),
- a rotor, which is connected to the energy conversion unit and has two rotor blades (30a, 30b) fastened to a hub (40),
- a measuring means arranged in the hub (40) for measuring the mechanical deformation of the hub (40), and
- an individual blade controller for setting the blade pitch angle of the rotor blades (30a, 30b),
**characterized in that**
the measuring means (50a, 60a, 50b, 60b) is designed to detect the distance between two defined locations opposite each other in the hub (40), and
the individual blade controller is designed to set the blade pitch angle of both rotor blades, on the basis of the distance measured between the defined locations or the distance change measured between the defined locations, in such a way that a minimum rotor pitch torque M_{YR} results.

2. The wind turbine (10) according to Claim 1, **characterized in that** the defined mutually opposite locations are arranged in a plane formed by rotor blades (30a, 30b) and the rotor axis.

3. The wind turbine (10) according to one of the preceding claims, **characterized in that** the defined locations are arranged in the hub (40) parallel to the rotor axis.

4. The wind turbine (10) according to one of the preceding claims, **characterized in that** the defined locations are located in the hub (40) in mutually diagonal positions,

5. The wind turbine (10) according to one of the preceding claims, **characterized in that** the measuring means (50a, 60a, 50b, 60b) is a laser measuring means.

6. The wind turbine (10) according to one of Claims 1 to 5, **characterized in that** the measuring means (50a, 60a, 50b, 60b) exhibit a luminous means and a camera detecting the position of the luminous means.

7. The wind turbine (10) according to one of the preceding claims, **characterized in that** the individual blade controller is designed to effect a minimum rotor pitch torque M_{YR} taking into account the difference angle of the rotor blades (30a, 30b).

8. The wind turbine (10) according to Claim 7, **characterized in that** the difference angle of the rotor blades (30a, 30b) is controlled as a function of the wind speed.

## Revendications

1. Éolienne (10) composée
- d'une tour (20),
- d'un transformateur d'énergie monté sur la tour (20),
- d'un rotor relié au transformateur d'énergie, possédant deux pales (30a, 30b) fixées sur un moyeu (40),
- d'un dispositif de mesure monté dans un moyeu (40) et permettant de mesurer la réformation mécanique du moyeu (40), et
- une commande pour chaque pale, afin de régler l'angle de fonctionnement des pales (30a, 30b),
**caractérisée en ce que**
le dispositif de mesure (50a, 60a, 50b, 60b) permettant de déterminer l'écart entre deux points définis, situés à l'intérieur du moyeu (40), l'un face à l'autre, et
la commande de chaque pale, qui est réglée selon l'écart mesuré entre les points définis ou selon le changement d'écart mesuré entre les points définis et passant au réglage de l'angle des deux pales, provoquant un couple de basculement M_{YR} minimal.

2. Éolienne (10) selon la revendication 1, **caractérisée en ce que** les points définis et situés l'un face à l'autre soient placés dans une des pales (30a, 30b) et sur un plan suivant l'axe des pales.

3. Éolienne (10) selon une des revendications précédentes, **caractérisée en ce que** les points définis dans le moyeu (40) soient placés parallèlement à l'axe de la pale.

4. Éolienne (10) selon une des revendications précédentes, **caractérisée en ce que** les points définis soient placés diagonalement au moyeu (40), l'un face à l'autre.

5. Éolienne (10) selon une des revendications précédentes, **caractérisée en ce que** le dispositif de mesure (50a, 60a, 50b, 60b) est un dispositif de mesure laser.

6. Éolienne (10) selon une des revendications 1 à 5, **caractérisée en ce que** les dispositifs de mesure (50a, 60a, 50b, 60b) présentent une lampe et une caméra enregistrant la position de la lampe.

7. Éolienne (10) selon une des revendications précédentes, **caractérisée en ce que** la commande de chacune des pales soit réglée pour provoquer un couple de basculement M_{YR} tout en tenant compte de l'angle de différence des pales (30a, 30b).

8. Éolienne (10) selon la revendication 7, **caractérisée en ce que** l'angle de différence des pales (30a, 30b) est commandé selon la vitesse du vent.
